# EUROPEAN PATENT APPLICATION

(11) **EP 1 864 949 A1**
(43) Date of publication of application: **12.12.2007**
(21) Application number: 07008262.3
(22) Date of filing: 24.04.2007
(51) Int. Cl.: C02F 3/34

(54) **Compound for reclaiming urban and industrial refuse and sewage**

(30) Priority: 30.05.2006 IT MI20061054
(71) Applicant: Cappa, Pier Erminio, 15033 Casale Monferrato AL (IT)
(72) Inventor: Cappa, Pier Erminio, 15033 Casale Monferrato AL (IT)
(74) Representative: Cicogna, Franco

(57) **Abstract**

The present invention relates to a compound for reclaiming urban and industrial refuses, and sewage in general, comprising lithotanium calcareum algae in an amount from 16 to 24%, eucalyptus and bacillus taurigensis algae in an amount from 16 to 24%, precipitated calcium carbonate in an amount from 14 to 22%, powder whey in an amount from 13 to 19%, powder dried olive residues in an amount from 16 to 24%, saccharomyces cervasae-bayanus enzymes in an amount from 0.2 to 0.4%, and ammonium sulphate NSO₃ in an amount sufficient to 100.

## Description

### BACKGROUND OF THE INVENTION

The present invention relates to a compound for reclaiming urban and industrial refuses, and sewage in general.

As is known, a problem which must be solved in processing urban and industrial refuses, and sewage in general, is that of properly disposing of them; at present, to solve this problem, the refuses are collected in collecting spaces, and rarely they are reclaimed for reusing them again, since, at present, no suitable processing technology for biologically reclaiming the refuses is available.

### SUMMARY OF THE INVENTION

Accordingly, the aim of the present invention is to solve the above mentioned problems, by providing a compound for reclaiming urban and industrial refuses, and sewage in general, affording to fully neutralize all the refuse polluting elements, thereby providing an easily recyclable end product.

Within the scope of the above mentioned aim, a main object of the invention is to provide such a compound which is of a full biological type, and which, moreover, is also adapted to operate as an antiparasitic and anticryptogamic material, as well as an agricultural field aiding agents, to increase the plant yield.

A further object of the present invention is to provide such a compound for reclaiming urban and industrial refuses which is very reliable and safe in operation.

Yet another object of the present invention is to provide such a reclaiming compound which can be easily made and which, moreover, is very competitive from a mere economic standpoint.

According to one aspect of the invention, the above mentioned aim and objects, as well as yet other objects, which will become more apparent hereinafter, are achieved by a reclaiming compound for reclaiming urban and industrial refuses, and sewage in general, according to the following disclosure.

More specifically, the compound according to the invention has the main feature that it has a full biologic nature, and that it is based on a use of an enzymatic mixture, allowing to modify polluting refuse materials, to transform them into a recycle product which can be easily reused.

In particular, the compound according to the present invention can be used for reclaiming animal and agricultural sewage, and urban and industrial refuses or waste, allowing to obtain and end product devoid of any polluting properties and which, moreover, can be reused in a very simple manner.

The subject compound substantially comprises lithotanium calcareum algae in a weight amount from 16 to 24%, preferably 20%; and eucalyptus and bacillus taurigensis algae, also in a rate by weight from 16 to 24%, preferably 20%.

To said algae, a precipitated calcium carbonate for zootechnical use, in a rate from 14 to 22%, preferably 18%, is added.

To improve the use of the compound, powder milk whey is further added, i.e. a lactase + amylase material, in a rate from 13 to 19%, preferably 16%, together with powder dried blood, in a rate from 16 to 24%, preferably 20%.

The above disclosed compound is further added with enzymes, preferably of a saccharomyces cervasae-bayanus type, in a rate by weight from 0.2 to 0.4%, preferably 0.3%.

For finishing the compound, and providing it with very efficient reclaiming properties, agricultural use ammonium sulphate NSO₃ in an amount sufficient to achieve a 100% amount is further added.

The thus made compound can be easily used for processing several types of refuses, by merely mixing the compound, having the above mentioned biological characteristics, with said refuses, so as quickly reclaim the refuses and allowing the reclaimed refuse material to be easily reused.

The subject compound further provides the advantage that it may also operate as an antiparasitic and anticryptogamic material, in the agricultural field, to increase the plant growth and yield.

The invention, as disclosed, is susceptible to several modifications and variations, all coming within the inventive idea.

In practicing the invention, the used materials, provided that they are compatible to the intended requirements, can be any depending on the contingent needs, and can be also replaced by other technically equivalent elements or materials.

## Claims

1. A compound for reclaiming urban and industrial refuses, and sewage in general, **characterized in that** said compound comprises lithotanium calcareum algae in a rate by weight from 16 to 24%, eucalyptus and bacillus taurigensis algae in a rate by weight from 16 to 24%, precipitated calcium carbonate in a rate by weight from 14 to 22%, powder whey in a rate by weight from 13 to 19%, powder dried olive residues in a rate by weight from 16 to 24%, saccharomyces cervasae-bayanus enzymes in a rate by weight from 0.2 to 0.4%, and ammonium sulphate NSO₃, in a rate by weight sufficient to achieve a full amount of 100.

2. A compound, according to the preceding claim, **characterized in that** said lithotanium calcareum algae are present in a rate by weight of 20%.

3. A compound, according to the preceding claims, **characterized in that** said eucalyptus and bacillus taurigensis algae are included in a rate by weight of 20%.

4. A compound, according to one or more of the preceding claims, **characterized in that** said precipitated calcium carbonate is of a zootechnical use type.

5. A compound, according to one or more of the preceding claims, **characterized in that** said precipitated calcium carbonate is included in a rate by weight of 18%.

6. A compound, according to one or more of the preceding claims, **characterized in that** said powder whey is included in a rate by weight of 16%.

7. A compound, according to one or more of the preceding claims, **characterized in that** said powder dried olive residues are included in a rate by weight of 20%.

8. A compound, according to one or more of the preceding claims, **characterized in that** said saccharomyces cervasae-bayanus enzymes are included in a rate by weight of 0.3%.

9. A compound, according to one or more of the preceding claims, **characterized in that** said ammonium sulphate is for an agricultural type use.

10. A compound for reclaiming urban and industrial refuses, and sewage in general, **characterized in that** said compound comprises two or more substances as disclosed in claims 2 to 9, even in different rates, and substantially as broadly disclosed and illustrated, and for the intended aim and objects.
